# EUROPEAN PATENT APPLICATION

(11) **EP 4 369 187 A1**
(43) Date of publication of application: **15.05.2024**
(21) Application number: 22206972.6
(22) Date of filing: 11.11.2022
(51) Int. Cl.: G06F 9/451, G05B 19/418, G06F 40/20

(54) **METHOD AND SYSTEM FOR IMPLEMENTING A VIRTUAL ASSISTANT FOR AUTOMATIC CONFIGURATION OF ENGINEERING OBJECTS**

(71) Applicant: Siemens Aktiengesellschaft, 80333 München (DE)
(72) Inventor: Nagaraj, Thejaswi, 560098 Bangalore (IN); Parmar, Madhvi, 560078 Bangalore (IN); Sahu, Sukalyan, 560100 Bangalore (IN)
(74) Representative: Isarpatent

(57) **Abstract**

The present invention provides a method and system implementing a virtual assistant for automatic configuration of engineering objects. The method comprises receiving, by the processing unit (202), a user request for information associated with an engineering object (108A) of a plurality of engineering objects (108A-N) of an engineering project (106). The method further comprises determining, by the processing unit (202), at least one metadata tag (124A) from a plurality of metadata tags (124A-N) based on the received user input. The method further comprises generating, by the processing unit (202), a response to the user request by application of an natural language processing algorithm on the at least one metadata tag (108A) and the set of metadata tags. The method further comprises outputting, by the processing unit (202), the generated response to the user via an output device (120A-N) .

## Description

The present invention relates to a field of engineering of computer assisted programming, and more particularly relates to a method and system implementing a virtual assistant for automatic configuration of engineering objects.

A technical installation such as an industrial plant comprises a plurality of engineering objects which function together to complete one or more objectives of the technical installation. Examples of the plurality of engineering objects may include, for example, a programmable logic controller, one or more field devices, or any other automation devices. Examples of the one or more devices includes but is not limited to, motors, rotors, mixers, furnaces, heaters, refrigerators, control valves, pumps, and actuators.

The plurality of engineering objects are operated by use of a plurality of virtual engineering objects which are executed in a processing unit of the plurality of engineering objects. Examples of the plurality of virtual engineering objects comprises program files, programming blocks, and machine learning models. The plurality of virtual engineering objects comprises instructions to run the plurality of engineering objects smoothly. However, the plurality of virtual engineering objects lack metadata associated with the plurality of engineering objects. Examples of the metadata of an engineering object comprises a functionality, a specification, a manufacturer detail, and maintenance details associated with the specific engineering object. The metadata further comprises information about a purpose of the engineering object in the technical installation. The metadata associated with the plurality of engineering objects help a commissioning engineer and/or a human operator to effectively commission and control the plurality of engineering objects.

Typically, information required by the commissioning engineer to effectively configure the plurality of engineering objects is stored in a plurality of documents associated with the plurality of engineering objects. The plurality of documents comprises process related documents like process operation description document, process flowchart, and process control philosophy, process and instrumentation diagrams, standard operating procedure documents, fire and safety rulebooks, emergency procedure books, and non-process documents such as bill of materials, brochures, and product manuals. A human operator may have to go through thousands of documents to understanda configuration process of the plurality of engineering objects. The technical installation may have hundreds, if not thousands of engineering objects. Each engineering object may have a large number of associated documents. Each of the documents comprises a plurality of data items which has dependencies with other data items in other documents of the plurality of documents. For example, a name of a first engineering object may be present in a first document, and a location of the first engineering object may be present in a second document. The first document and the second document refer to the same engineering objects using different names. Thus, the human operator may have difficulty in a first reference to an engineering object in the first document, to a second reference to the same engineering object in the second document. For effective commissioning of the engineering object, the human operator has to map information present in the first and second document to the first engineering object.

Hence, data items of thousands of documents have to be analyzed, and mapped with each other during a commissioning period. The commissioning period would typically span a few months. It is humanly impossible to read, analyze and extract the data items in the thousands of documents within the said time span. Further, a number of documents which can be analyzed by the human operator may be limited. Thus, the metadata extracted by the human operator may be incomplete.

In light of above, there exists a need for an efficient method and system for implementing an industrial virtual assistant for automatic configuration of an engineering object.

Therefore, it is an object of the present invention to provide a method and system for implementing an industrial virtual assistant for automatic configuration of an engineering object using machine learning.

The object of the invention is achieved by a method for implementing a virtual assistant for automatic configuration of engineering objects.

The object of the invention is achieved by a method of implementing a virtual assistant for automatic configuration of a plurality of engineering objects in an engineering project. The engineering project comprises the plurality of engineering objects and a plurality of virtual engineering objects. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of virtual engineering objects comprises program files, programming blocks, and machine learning models. The plurality of virtual engineering objects comprises instructions to run the plurality of engineering objects smoothly.

The plurality of engineering objects are operated by use of the plurality of virtual engineering objects which are executed in a processing unit of an industrial control system. The engineering projects is configured to control the plurality of engineering objects to achieve a specific objective in a technical installation. Examples of the technical installation includes, a power plant, a manufacturing plant, and a water treatment plant.

Each engineering object of the plurality of engineering objects has a plurality of properties which are described in a plurality of documents associated with the plurality of engineering objects. The plurality of properties includes but is not limited to information associated with compatibility of the engineering objects with other engineering objects, temperature rating, pressure rating, a function in the engineering project, configuration settings associated with the plurality of engineering objects and residual life of the plurality of engineering objects. The plurality of documents comprises process related documents like process operation description document, process flowchart, and process control philosophy, process and instrumentation diagrams, and non-process documents such as bill of materials, brochures, statement of procedure documents, and product manuals. Furthermore, the plurality of documents comprises information associated with a plurality of dependencies of each property of the plurality of properties with each other.

For example, in a case where a first property such as a residual life of a specific engineering object is lower than a set threshold, then a second property such as a temperature rating of the specific engineering object is lower than a temperature rating of the specific engineering object when the residual life is higher than the set threshold. In another example, a power rating of the specific engineering object is dependent on a power rating of a set of engineering objects which are coupled to the specific engineering object. The plurality of documents comprises paper based documents as well as electronic documents.

In one example, the plurality of documents comprises a list of measurements taken by a plurality of field sensors from the plurality of engineering objects. In such a case, the plurality of dependencies comprises information associated with interelationships between a first property of the specific engineering object and a measurement taken by a specific field sensor of the plurality of field sensors.

In one example, the specific field sensor is a temperature sensor which detects a temperature of the specific engineering object. Furthermore, the voltage rating of the specific engineering object is dependent on the temperature detected by the temperature sensor. In such a case, the plurality of documents comprise information associated with variation of the voltage rating based on the detected temperature.

In the preferred embodiment, the method comprises analyzing, by the processing unit, a plurality of documents by application of an optical character recognition algorithm on the plurality of documents. Examples of the optical character recognition algorithm includes but is not limited to a Calamari algorithm, a Kraken algorithm, and a Keras algorithms. The optical character recognition algorithm is configured to generate a plurality of texts from the plurality of documents. In one example, an image capturing device is used to capture a plurality of images of each page in the plurality of documents. In such a case, the optical character recognition algorithm is applied on each of the plurality of images. The method further comprises analyzing, by the processing unit, the plurality of texts with a natural language processing algorithm. In one example, the natural langguage processing algorithm is at least one of a named entity recognition algorithm, a text summarization algorithm, and a tokenization algorithm.

The natural language processing algorithm is configured to extract a plurality of data items from the extracted plurality of texts. The plurality of data items comprises information associated with one or more properties of each engineering object of the plurality of engineering objects. Examples of the one or more properties comprises a name, a voltage rating, a power rating, a purpose, a function, a specification, a manufacturer details, and a maintenance details associated with the plurality of engineering objects. For example, in a case where the plurality of documents comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating".

In another example, the one or more properties comprises hardware and software configuration details of each of the plurality of engineering objects. Examples of information about the hardware configuration includes information about a voltage rating, a power rating, a purpose, a function, a specification, a manufacturer details, and a maintenance details. Examples of information about the software configuration includes information about a software platform, an operating system, supported network protocols and IP address of each engineering object of the plurality of engineering objects. Thus, the method comprises determining by the processing unit, from the analyzed plurality of documents, the plurality of data items which contain information associated with the one or more properties of each of the plurality of engineering objects.

In the preferred embodiment, the method further comprises generating, by the processing unit, a name graph based on an analysis of the determined plurality of data items and the plurality of documents. The name graph is a knowledge graph comprising information about interrelationships between the plurality of data items.

The name graph comprises a plurality of nodes and a plurality of links between each of the plurality of nodes. Each node of the plurality of nodes represents a data item associated with at least one engineering object of the plurality of engineering object. Each link of the plurality of link comprises information associated with an interelationship between one or more engineering objects of the plurality of engineering objects. In other words, each node of the plurality of nodes comprises information associated with a specific property of a specific engineering object of the plurality of engineering objects. Furthermore, the plurality of links between each of the plurality of nodes comprises information about an interrelationship between a first property of an engineering object and a second property of the engineering object.

In one example the plurality of documents comprises a first statement "voltage rating of motor is 300 volts" and a second statement "a first object is a motor" and the plurality of data items comprises the first data item "first object", the second data item "motor", and the third data item "300 volts". In such a case, the plurality of nodes comprises a first node comprising information about the first data item "first object", a second node comprising information about the second data item "motor", a third node comprising information about the third data item "300 volts" and a fourth node comprising information about the fourth data item "voltage rating".

Furthermore, in the name graph, the first node is linked to the second node via a first link. Thus, the name graph comprises a first information that the first data item "the first object" is related to the second data item "motor". Furthermore, in the name graph, the second node is linked to the third node. Thus the name graph comprises a second information that the second data item "the motor" is related to the third data item "300 volts". It is noted that each of the plurality of data items comprises information about a specific engineering object of the plurality of engineering objects.

In other words, the name graph comprises information associated with interrelationships between one or more data items of the plurality of data items, and interrelationships between the plurality of data items and the plurality of engineering objects of the engineering project.

In the preferred embodiment, the method further comprises classifying, by the processing unit, the plurality of nodes of the name graph into a plurality of groups of nodes, by application of a deep learning model on the plurality of nodes of the name graph. In one example, the deep learning model is at least one of a convolutional neural network, a long short term neural network, recurrent neural network, and a radial basis neural network. In one example, the deep learning model is trained using a training set comprising information about a set of engineering projects and a plurality of name graphs associated with the set of engineering projects. Each of the set of engineering projects comprises a set of engineering objects. Each node of the plurality of name graphs comprises information about a specific engineering object of the set of engineering objects in each of the plurality of engineering projects. In the training set, each node of the plurality of name graph is labelled with a plurality of labels. The plurality of labels comprises information about correspondence between each node of the plurality of name graphs and each engineering objects of the set of engineering objects in each of the plurality of engineering projects.

The deep learning model is trained to classify the plurality of nodes into the plurality of groups such that each group of nodes of the plurality of group of nodes correspond to a specific engineering object of the plurality of engineering objects. In another words, each group of nodes of the plurality of group of nodes comprises information associated with a set of properties of the specific engineering object. The method further comprises extracting, by the processing unit, the set of properties of each engineering object of the plurality of engineering objects, from each group of nodes of the plurality of group of nodes. The method further comprises generating, by the processing unit, one or more metadata tags for each of the plurality of engineering objects by compiling the set of properties extracted for each of the plurality of engineering objects. In otherwords, the one or more metadata tags comprises information about the set of properties associated with each of the plurality of engineering objects. In one example, each property in the set of property is recorded in a specific metadata tag of a plurality of metadata tags. In another example, each metadata tag of the plurality of metadata tags comprises one or more properties associated with the specific engineering object. In other words, the method comprises generating, by the processing unit one or more metadata tags for a specific engineering object of the plurality of engineering objects based on an analysis of each group of nodes of the plurality of group of nodes.

In one example, the one or more metadata tags are generated for the specific engineering object further based on an analysis of one or more data items associated with the plurality of nodes of the name graph. The one or more data items comprises information associated with one or more properties of the plurality of engineering objects. For example, examples of the one or more data items includes but is not limited to a name, a voltage rating, a power rating, a temperature rating of the specific engineering object. In one example, the one or more data items are analysed by the processing unit by application of the deep learning model on the plurality of data items. In one example, the deep learning models is configured to analyze the name graph to determine a plurality of interelationships between the plurality of data items, the plurality of nodes, and the one or more metadata tags generated for each of the plurality of engineering objects. Furthermore, the processing unit is configured to convert the generated plurality of interelationships into a set of name graph instances. The processing unit is configured to convert the plurality of interrelationships to the set of name graphs instances by application of a graph algorithm on the plurality of interrelationships. Examples of the graph algorithm includes but is not limited to a breadth first search algorithm, a depth first search algorithm, and shortest path first search algorithm. The method further comprises modifying, by the processing unit, the name graph by inserting the generated set of name graph instances into the name graph. Thus, the modified name graph further comprises information about interrelationships between each of one or more metadata tags and the plurality of group of nodes.

In one example, the generation of the one or more metadata items is executed in a plurality of iterations. Each iterative stage in the plurality of iterations comprises a first step of analyzing, by the processing unit (202), an input set of artifacts (508A-B) in the name graph by application of the Deep learning model on the name graphs. In one example, the input set of artifact comprises one or more nodes of the name graph. In another example, the input set of artifacts comprises one or more data items from the plurality of data items associated with the name graph. In yet another example, the input set of artifacts comprises information associated with an interrelationship between each data item of the plurality of data items, and a specific engineering object of the plurality of engineering objects.

The method further comprises determining, by the processing unit, one or more data items from the plurality of data items based on the analysis of the input set of artifacts. The determined one or more data items comprises information associated with one or more properties of a specific engineering object of the plurality of engineering objects. The method further comprises determining, by the processing unit, a set of duplicate artifacts in the input set of artifacts. The set of duplicate artifacts are determined based on an comparison of each artifact with other artifacts in the input set of artifacts.

The method further comprises determining, by the processing unit, a plurality of differences between each artifact and other artifacts of the input set of artifacts. The method further comprises generating, by the processing unit, a first set of smart artifacts associated with the specific engineering object based on the determined one or more data items. In one example, the first set of smart artifacts is generated further based on the determined plurality of differences. The first set of smart artifacts comprises a set of nodes which comprises a set of properties of a specific engineering object of the plurality of engineering objects. In other words, the first set of smart artifacts comprises information associated with the set of properties of the specific engineering object, and information associated with the interrelationship of the specific engineering object with the determined one or more data items of the plurality of data items.

The method further comprises generating, by the processing unit a preprocessing dataset from the analyzed input set of artifacts. The preprocessing dataset comprises the preprocessing dataset comprises information about a plurality of properties of all of the plurality of engineering objects other than the specific engineering object. The first set of smart artifacts and the preprocessing dataset are used as the input set of artifacts in a subsequent iteration of the plurality of iterations. Through execution of the plurality of iterations, the processing unit is configured to generate a set of metadata tags for the specific engineering object based on an analysis of the first set of smart artifacts and the preprocessing dataset. In other words, the method comprises generating, by the processing unit, the plurality of metadata tags for the plurality of engineering objects of the engineering project.

In the preferred embodiment, the method further comprises receiving, by the processing unit a user request for information associated with a first engineering object of the plurality of engineering objects of the engineering project. In one example, the user request is received as at least one of a voice based request, a text based request or a gesture based request. In one example, the information requested in the user request comprises information associated with the one or more properties of the first engineering object. In one example, the user request comprises a request for a voltage rating of the first engineering object. In another example, the user request is for information about an optimum hardware configuration for the first engineering object. In yet another example, the user request is for information associated with an optimum software configuration for the first engineering object.

In the preferred embodiment, the method comprises determining, by the processing unit, at least one metadata tag from the plurality of metadata tags based on the received user request. The determined at least one metadata tag comprises information associated with the first engineering object. In one example, the received user request comprises a name of the first engineering object. In such a case, the at least one metadata tag is determined based on the name of the first engineering object and a name which is stored in the at least one metadata tag. In another example, the user request comprises a serial number of the first engineering object. In such a case, the at least one metadata tag is determined based on the serial number of the first engineering object and a serial number comprised in the at least one metadata tag.

In the preferred embodiment, the method further comprises analyzing, by the processing unit, the name graph to determine one or more nodes which correspond to the at least one metadata tag. The one or more nodes comprises one or more properties associated with the first engineering object. For example, the one or more nodes comprise at least one of a voltage, a voltage rating, a temperature, a temperature rating, a power rating, an optimum hardware configuration or an optimum software configuration of the engineering object. Furthermore, the one or more nodes are linked to each other via one or more links in the name graph. The one or more links comprise information associated with dependencies between the one or more properties of the first engineering object. For example, a first property of the first engineering object may depend on a second property of the engineering object. In one example, a voltage rating of the first engineering object may depend upon a temperature of the engineering object. Hence, in such a case, a first node representing the temperature of the first engineering object is linked to a second node which represents the voltage rating of the first engineering object.

In the preferred embodiment, the method further comprises determining a set of nodes in the name graph, which are related to the determined one or more nodes of the name graph. The determined set of nodes those nodes which are connected to the determined one or more nodes via one or more links of the plurality of links of the name graph. In one example, the set of nodes comprises information associated one or more properties of a second engineering object. The second engineering object is contextually related to the first engineering object. In one example, the first engineering object is communicatively coupled to the second engineering object in the engineering project. In such a case, one or more properties of the first engineering object is dependent on the second engineering object. For example, in a case where the second engineering object uses a specific communication protocol to communicate, then the first engineering object also has to use the specific communication protocol to communicate with the second engineering object. Hence, a property, of the first engineering object, is to use the specific communication protocol. In another example, the first engineering object and the second engineering object are connected in an electrical series connection. Furthermore, the first engineering object has a first current rating which is higher than a second current rating of the second engineering object. In such a case, a current rating of the first engineering object is considered to be the second current rating instead of the first current rating. In another example, one or more properties of the first engineering object is dependent upon a configuration details of the second engineering object. In such a case, the set of nodes comprise information about the configuration details of the second engineering objects.

In the preferred embodiment, the method further comprises analyzing the name graph to determine a set of metadata tags from the plurality of metadata tags. The set of metadata tags are associated with the set of nodes of the name graph. In other words, the set of metadata tags are contextually related to the at least one metadata tag associated with the first engineering object. The set of metadata tags comprise information about one or more properties of the first engineering object, which are contextually related with one or more properties of the second engineering object. The set of metadata tags are determined based on an analysis of the set of nodes and the determined one or more nodes of the name graph. The set of metadata tags and the at least one metadata tag comprises information about one or more properties of the first engineering object and the second engineering object. In one example, the one or more properties, in the set of metadata tags and the at least one metadata tag, comprises a hardware configuration information and a software configuration information for the first engineering object. Examples of the hardware configuration information includes but is not limited to information about a voltage rating, a current rating, a input port connection, an output port connection, a connection diagram of the first engineering object, and information associated with interconnections between the first engineering object and other engineering objects in the plurality of engineering objects of the engineering project. Examples of the software configuration information comprises, but is not limited to an operating system, a computation platform, and a communication protocol of the first engineering object.

In the preferred embodiment, the method further comprises extracting the one or more properties of the first engineering object and the second engineering object from the set of metadata tags and the at least one metadata tag. In one example, the the processing unit is configured to extract information associated with the hardware and software configuration for the engineering object from the at least one metadata tag and the set of metadata tags.

In the preferred embodiment, the method further comprises generating, by the processing unit a response to the user request by application of a natural language processing algorithm on the extracted hardware and software configuration. In one example, the method further comprises generating, by the processing unit the response to the user request by application of the natural language processing algorithm on the at least one metadata tag and the set of metadata tags. In one example, the generated response is at least one of a sound based or video based response. The natural language algorithm is configured to convert the extracted hardware and software configuration into a user perceivable response. In another example, the response to the user response is generated by application of the natural language processing algorithm on the at least one metadata tag and the determined set of metadata tags. The method further comprises outputting the generated response to a user via an output device such as a speaker, display monitor, or a handheld device.

The method further comprises integrating, by the processing unit the plurality of metadata tags into a plurality of virtual engineering objects associated with the plurality of engineering objects of the engineering project. Examples of the plurality of virtual engineering objects include but is not limited to a digital twin of the plurality of engineering object, code snippets, firmware sourcecode, object libraries, and programming code of the plurality of engineering objects.

The object of the present invention is also achieved by an engineering system for automatic configuration of engineering objects. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable implementing a virtual assistant for automatic configuration of engineering objects, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-D: is a process flowchart illustrating an exemplary method of implementing a virtual assistant for automatic configuration of engineering objects, according to an embodiment of the present invention;
- FIG 5: is a schematic representation of an exemplary process of generating metadata tags for a plurality of engineering objects, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

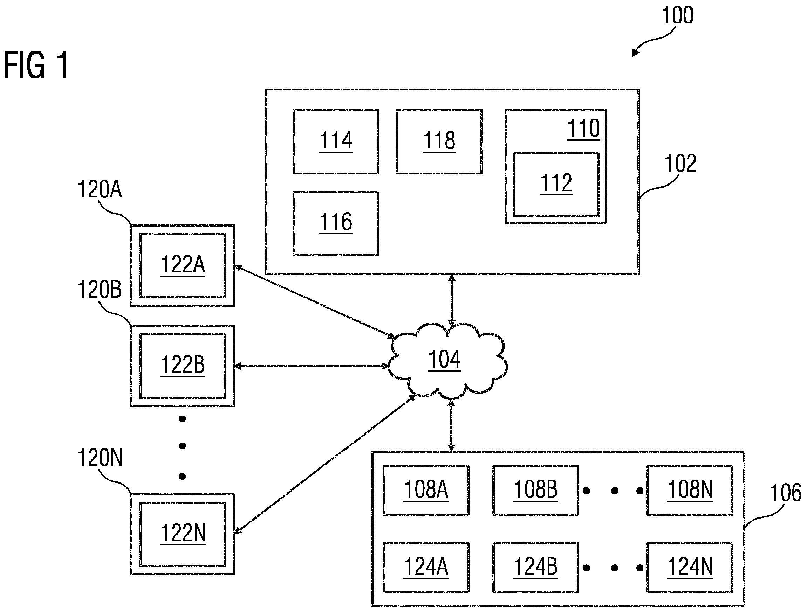

FIG 1 is a block diagram of an industrial environment 100 capable of generating a plurality of metadata tags 124A-N for a plurality of engineering objects 108A-N of an engineering project 106, according to an embodiment of the present invention. In FIG 1, the industrial environment 100 includes an engineering system 102, the engineering project 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a technical installation via the network 104 (such as Local Area Network (LAN), Wide Area Network (WAN), Wi-Fi, Internet, any short range or wide range communication). The engineering system 102 is also connected to the one or more client devices 120AN via the network 104. The technical installation functions smoothly by use of the engineering project 106.

The engineering project 106 comprises the plurality of engineering objects 108A-N and a plurality of virtual engineering objects. Examples of the plurality of engineering objects 108A-N may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of virtual engineering objects comprises program files, programming blocks, and machine learning models. The plurality of virtual engineering objects comprises instructions to run the plurality of engineering objects smoothly.

The plurality of engineering objects 108A-N are operated by use of the plurality of virtual engineering objects which are executed in a processing unit of an industrial control system. The engineering project 106 is configured to control the plurality of engineering objects 108A-N to achieve a specific objective in the technical installation. Examples of the technical installation includes, a power plant, a manufacturing plant, and a water treatment plant.

Each engineering object of the plurality of engineering objects 108A-N has a plurality of properties which are described in a plurality of documents associated with the plurality of engineering objects 108A-N. The plurality of properties includes but is not limited to information associated with compatibility of each engineering objects with other engineering objects of the plurality of engineering objects, temperature rating, pressure rating, a function in the engineering project 106, configuration settings associated with the plurality of engineering objects and residual life of the plurality of engineering objects 108A-N. The plurality of documents comprises process related documents like process operation description document, process flowchart, and process control philosophy, process and instrumentation diagrams, and non-process documents such as bill of materials, brochures, statement of procedure documents, and product manuals. Furthermore, the plurality of documents comprises information associated with a plurality of dependencies of each property of the plurality of properties with each other.

For example, in a case where a first property such as a residual life of a specific engineering object is lower than a set threshold, then a second property such as a temperature rating of the specific engineering object is lower than a temperature rating of the specific engineering object when the residual life is higher than the set threshold. In another example, a power rating of the specific engineering object is dependent on a power rating of a set of engineering objects which are coupled to the specific engineering object. The plurality of documents comprises paper based documents as well as electronic documents.

In one example, the plurality of documents comprises a list of measurements taken by a plurality of field sensors from the plurality of engineering objects 108A-N. In such a case, the plurality of dependencies comprises information associated with interelationships between a first property of the specific engineering object and a measurement taken by a specific field sensor of the plurality of field sensors.

In one example, the specific field sensor is a temperature sensor which detects a temperature of the specific engineering object. Furthermore, the voltage rating of the specific engineering object is dependent on the temperature detected by the temperature sensor. In such a case, the plurality of documents comprise information associated with variation of the voltage rating based on the detected temperature.

The engineering system 102 is connected to the plurality of engineering objects 108A-N in the engineering project 106 via the network 104. The plurality of engineering objects 108A-N may be connected to each other or several other components (not shown in FIG 1) via physical connections. The physical connections may be through wiring between the plurality of engineering objects 108A-N. Alternatively, the plurality of engineering objects 108A-N may also be connected via nonphysical connections (such as Internet of Things (IOT)) and 5G networks. Although, FIG 1 illustrates the engineering system 102 connected to one engineering project 106, one skilled in the art can envision that the engineering system 102 can be connected to several engineering projects 106 located at different geographical locations via the network 104.

The one or more client devices 120A-N may be a desktop computer, laptop computer, tablet, smart phone and the like. Each of the one or more client devices 120A-N is provided with an 122A-N for generating and/or editing the plurality of virtual engineering objects respectively. For example, the one or more client devices 120A-N can access the engineering system 102 for automatically generating engineering programs. The one or more client devices 120A-N can access cloud applications (such as providing performance visualization of the plurality of engineering objects 108A-N via a web browser). Throughout the specification, the terms "client device" and "user device" are used interchangeably.

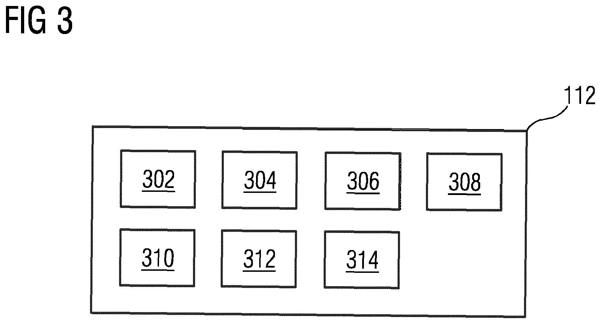

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation comprising the plurality of engineering objects 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the technical installation, and the one or more client device(s) 120A-N. The interface (such as cloud interface) (not shown in FIG 1) may allow the engineers at the one or more client device (s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the one or more client devices 120A-N to generate the plurality of virtual engineering objects. The platform 110 may further comprise an automation module 112 configured for generating engineering programs. Details of the automation module 112 is explained in FIG. 3.

The database 118 stores the information relating to the technical installation and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store the plurality of virtual engineering objects such as engineering project files, engineering programs, object behavior model, parameter values associated with the plurality of engineering objects 108A-N, test results, simulation results, status messages, one or more simulation instances, graphical programs, program logics, program logic patterns, product manuals of the plurality of engineering objects 108A-N and engineering object properties, one or more engineering object blocks, relationship information between the engineering objects, requirements, program update messages and the like.

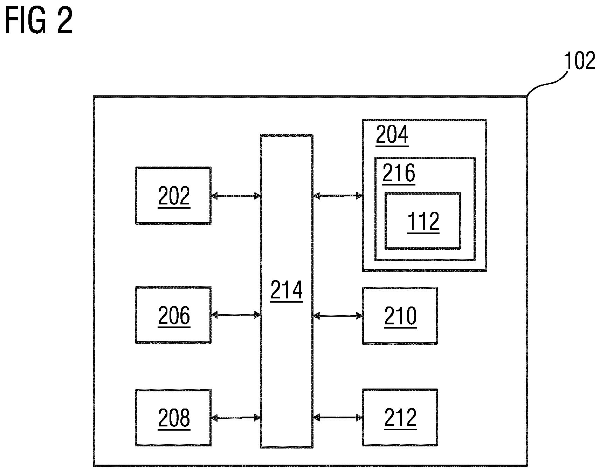

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computerreadable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

When executed by the processing unit 202, the automation module 112 causes the processing unit 202 to analyze a plurality of documents by application of an optical character recognition algorithm on the plurality of documents. Examples of the optical character recognition algorithm includes but is not limited to a Calamari algorithm, a Kraken algorithm, and a Keras algorithms. The optical character recognition algorithm is configured to generate a plurality of texts from the plurality of documents. In one example, an image capturing device is used to capture a plurality of images of each page in the plurality of documents. In such a case, the optical character recognition algorithm is applied on each of the plurality of images. The automation module 112 further causes the processing unit 202 to analyze the plurality of texts with a natural language processing algorithm. In one example, the natural langguage processing algorithm is at least one of a named entity recognition algorithm, a text summarization algorithm, and a tokenization algorithm.

The natural language processing algorithm is configured to extract a plurality of data items from the extracted plurality of texts. The plurality of data items comprises information associated with one or more properties of each engineering object of the plurality of engineering objects. Examples of the one or more properties comprises a name, a voltage rating, a power rating, a purpose, a function, a specification, a manufacturer details, and a maintenance details associated with the plurality of engineering objects. For example, in a case where the plurality of documents comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating".

In another example, the one or more properties comprises hardware and software configuration details of each of the plurality of engineering objects. Examples of information about the hardware configuration includes information about a voltage rating, a power rating, a purpose, a function, a specification, a manufacturer details, and a maintenance details. Examples of information about the software configuration includes information about a software platform, an operating system, supported network protocols and IP address of each engineering object of the plurality of engineering objects. The automation module 112 further causes the processing unit 202 to determine from the analyzed plurality of documents, the plurality of data items which contain information associated with the one or more properties of each of the plurality of engineering objects 108A-N.

The automation module 112 further causes the processing unit 202 to generate a name graph based on an analysis of the determined plurality of data items and the plurality of documents. The name graph is a knowledge graph comprising information about interrelationships between the plurality of data items.

The name graph comprises a plurality of nodes and a plurality of links between each of the plurality of nodes. Each node of the plurality of nodes represents a data item associated with at least one engineering object of the plurality of engineering object. Each link of the plurality of link comprises information associated with an interelationship between one or more engineering objects of the plurality of engineering objects. In other words, each node of the plurality of nodes comprises information associated with a specific property of a specific engineering object of the plurality of engineering objects 108A-N. Furthermore, the plurality of links between each of the plurality of nodes comprises information about an interrelationship between a first property of an engineering object and a second property of the engineering object.

In one example the plurality of documents comprises a first statement "voltage rating of motor is 300 volts" and a second statement "a first object is a motor" and the plurality of data items comprises the first data item "first object", the second data item "motor", and the third data item "300 volts". In such a case, the plurality of nodes comprises a first node comprising information about the first data item "first object", a second node comprising information about the second data item "motor", a third node comprising information about the third data item "300 volts" and a fourth node comprising information about the fourth data item "voltage rating".

Furthermore, in the name graph, the first node is linked to the second node via a first link. Thus, the name graph comprises a first information that the first data item "the first object" is related to the second data item "motor". Furthermore, in the name graph, the second node is linked to the third node. Thus the name graph comprises a second information that the second data item "the motor" is related to the third data item "300 volts". It is noted that each of the plurality of data items comprises information about a specific engineering object of the plurality of engineering objects.

In other words, the name graph comprises information associated with interrelationships between one or more data items of the plurality of data items, and interrelationships between the plurality of data items and the plurality of engineering objects of the engineering project.

The automation module 112 further causes the processing unit 202 to classify the plurality of nodes of the name graph into a plurality of groups of nodes, by application of a deep learning model on the plurality of nodes of the name graph. In one example, the deep learning model is at least one of a convolutional neural network, a long short term neural network, recurrent neural network, and a radial basis neural network. In one example, the deep learning model is trained using a training set comprising information about a set of engineering projects and a plurality of name graphs associated with the set of engineering projects. Each of the set of engineering projects comprises a set of engineering objects. Each node of the plurality of name graphs comprises information about a specific engineering object of the set of engineering objects in each of the plurality of engineering projects. In the training set, each node of the plurality of name graph is labelled with a plurality of labels. The plurality of labels comprises information about correspondence between each node of the plurality of name graphs and each engineering objects of the set of engineering objects in each of the plurality of engineering projects.

The deep learning model is trained to classify the plurality of nodes into the plurality of groups such that each group of nodes of the plurality of group of nodes correspond to a specific engineering object of the plurality of engineering objects 108A-N. In another words, each group of nodes of the plurality of group of nodes comprises information associated with a set of properties of the specific engineering object. The automation module 112 further causes the processing unit 202 to extract the set of properties of each engineering object of the plurality of engineering objects 108A-N, from each group of nodes of the plurality of group of nodes. The automation module 112 further causes the processing unit 202 to generate one or more metadata tags for each of the plurality of engineering objects 108A-N by compiling the set of properties extracted for each of the plurality of engineering objects. In otherwords, the one or more metadata tags comprises information about the set of properties associated with each of the plurality of engineering objects 108A-N. In one example, each property in the set of property is recorded in a specific metadata tag of a plurality of metadata tags. In another example, each metadata tag of the plurality of metadata tags comprises one or more properties associated with the specific engineering object. The automation module 112 further causes the processing unit 202 to generate one or more metadata tags for a specific engineering object of the plurality of engineering objects 108A-N based on an analysis of each group of nodes of the plurality of group of nodes.

In one example, the one or more metadata tags are generated for the specific engineering object further based on an analysis of one or more data items associated with the plurality of nodes of the name graph. The one or more data items comprises information associated with one or more properties of the plurality of engineering objects 108A-N. For example, examples of the one or more data items includes but is not limited to a name, a voltage rating, a power rating, a temperature rating of the specific engineering object. In one example, the one or more data items are analysed by the processing unit 202 by application of the deep learning model on the plurality of data items. In one example, the deep learning models is configured to analyze the name graph to determine a plurality of interelationships between the plurality of data items, the plurality of nodes, and the one or more metadata tags generated for each of the plurality of engineering objects 108A-N. Furthermore, the processing unit 202 is configured to convert the generated plurality of interelationships into a set of name graph instances. The processing unit 202 is configured to convert the plurality of interrelationships to the set of name graphs instances by application of a graph algorithm on the plurality of interrelationships. Examples of the graph algorithm includes but is not limited to a breadth first search algorithm, a depth first search algorithm, and shortest path first search algorithm. The automation module 112 further causes the processing unit 202 to modify the name graph by inserting the generated set of name graph instances into the name graph. Thus, the modified name graph further comprises information about interrelationships between each of one or more metadata tags and the plurality of group of nodes.

In one example, the generation of the one or more metadata items is executed in a plurality of iterations. Each iterative stage in the plurality of iterations comprises a first step of analyzing, by the processing unit (202), an input set of artifacts (508A-B) in the name graph by application of the Deep learning model on the name graphs. In one example, the input set of artifact comprises one or more nodes of the name graph. In another example, the input set of artifacts comprises one or more data items from the plurality of data items associated with the name graph. In yet another example, the input set of artifacts comprises information associated with an interrelationship between each data item of the plurality of data items, and a specific engineering object of the plurality of engineering objects 108A-N.

The automation module 112 further causes the processing unit 202 to determine one or more data items from the plurality of data items based on the analysis of the input set of artifacts. The determined one or more data items comprises information associated with one or more properties of a specific engineering object of the plurality of engineering objects. The automation module 112 further causes the processing unit 202 to determine a set of duplicate artifacts in the input set of artifacts. The set of duplicate artifacts are determined based on an comparison of each artifact with other artifacts in the input set of artifacts.

The automation module 112 further causes the processing unit 202 to determine a plurality of differences between each artifact and other artifacts of the input set of artifacts. The automation module 112 further causes the processing unit 202 to generate a first set of smart artifacts associated with the specific engineering object based on the determined one or more data items. In one example, the first set of smart artifacts is generated further based on the determined plurality of differences. The first set of smart artifacts comprises a set of nodes which comprises a set of properties of a specific engineering object of the plurality of engineering objects. In other words, the first set of smart artifacts comprises information associated with the set of properties of the specific engineering object, and information associated with the interrelationship of the specific engineering object with the determined one or more data items of the plurality of data items.

The automation module 112 further causes the processing unit 202 to generate a preprocessing dataset from the analyzed input set of artifacts. The preprocessing dataset comprises the preprocessing dataset comprises information about a plurality of properties of all of the plurality of engineering objects other than the specific engineering object. The first set of smart artifacts and the preprocessing dataset are used as the input set of artifacts in a subsequent iteration of the plurality of iterations. Through execution of the plurality of iterations, the processing unit is configured to generate a set of metadata tags for the specific engineering object based on an analysis of the first set of smart artifacts and the preprocessing dataset. In other words, the automation module 112 further causes the processing unit 202 to generate the plurality of metadata tags 124A-N for the plurality of engineering objects 108A-N of the engineering project 106.

The automation module 112 further causes the processing unit 202 to receive a user request for information associated with a first engineering object of the plurality of engineering objects 108A-N of the engineering projectm 106. In one example, the user request is received as at least one of a voice based request, a text based request or a gesture based request. In one example, the information requested in the user request comprises information associated with the one or more properties of the first engineering object. In one example, the user request comprises a request for a voltage rating of the first engineering object. In another example, the user request is for information about an optimum hardware configuration for the first engineering object. In yet another example, the user request is for information associated with an optimum software configuration for the first engineering object.

The automation module 112 further causes the processing unit 202 to determine at least one metadata tag from the plurality of metadata tags 124A-N based on the received user request. The determined at least one metadata tag comprises information associated with the first engineering object. In one example, the received user request comprises a name of the first engineering object. In such a case, the at least one metadata tag is determined based on the name of the first engineering object and a name which is stored in the at least one metadata tag. In another example, the user request comprises a serial number of the first engineering object. In such a case, the at least one metadata tag is determined based on the serial number of the first engineering object and a serial number comprised in the at least one metadata tag.

The automation module 112 further causes the processing unit 202 to analyze the name graph to determine one or more nodes which correspond to the at least one metadata tag. The one or more nodes comprises one or more properties associated with the first engineering object. For example, the one or more nodes comprise at least one of a voltage, a voltage rating, a temperature, a temperature rating, a power rating, an optimum hardware configuration or an optimum software configuration of the engineering object. Furthermore, the one or more nodes are linked to each other via one or more links in the name graph. The one or more links comprise information associated with dependencies between the one or more properties of the first engineering object. For example, a first property of the first engineering object may depend on a second property of the engineering object. In one example, a voltage rating of the first engineering object may depend upon a temperature of the engineering object. Hence, in such a case, a first node representing the temperature of the first engineering object is linked to a second node which represents the voltage rating of the first engineering object.

The automation module 112 further causes the processing unit 202 to determine a set of nodes in the name graph, which are related to the determined one or more nodes of the name graph. The determined set of nodes those nodes which are connected to the determined one or more nodes via one or more links of the plurality of links of the name graph. In one example, the set of nodes comprises information associated one or more properties of a second engineering object. The second engineering object is contextually related to the first engineering object. In one example, the first engineering object is communicatively coupled to the second engineering object in the engineering project. In such a case, one or more properties of the first engineering object is dependent on the second engineering object. For example, in a case where the second engineering object uses a specific communication protocol to communicate, then the first engineering object also has to use the specific communication protocol to communicate with the second engineering object. Hence, a property, of the first engineering object, is to use the specific communication protocol. In another example, the first engineering object and the second engineering object are connected in an electrical series connection. Furthermore, the first engineering object has a first current rating which is higher than a second current rating of the second engineering object. In such a case, a current rating of the first engineering object is considered to be the second current rating instead of the first current rating. In another example, one or more properties of the first engineering object is dependent upon a configuration details of the second engineering object. In such a case, the set of nodes comprise information about the configuration details of the second engineering objects.

The automation module 112 further causes the processing unit 202 to analyze the name graph to determine a set of metadata tags from the plurality of metadata tags. The set of metadata tags are associated with the set of nodes of the name graph.

In other words, the set of metadata tags are contextually related to the at least one metadata tag associated with the first engineering object. The set of metadata tags comprise information about one or more properties of the first engineering object, which are contextually related with one or more properties of the second engineering object. The set of metadata tags are determined based on an analysis of the set of nodes and the determined one or more nodes of the name graph. The set of metadata tags and the at least one metadata tag comprises information about one or more properties of the first engineering object and the second engineering object.

In one example, the one or more properties, in the set of metadata tags and the at least one metadata tag, comprises a hardware configuration information and a software configuration information for the first engineering object. Examples of the hardware configuration information includes but is not limited to information about a voltage rating, a current rating, a input port connection, an output port connection, a connection diagram of the first engineering object, and information associated with interconnections between the first engineering object and other engineering objects in the plurality of engineering objects of the engineering project. Examples of the software configuration information comprises, but is not limited to an operating system, a computation platform, and a communication protocol of the first engineering object.

The automation module 112 further causes the processing unit 202 to extract the one or more properties of the first engineering object and the second engineering object from the set of metadata tags and the at least one metadata tag. In one example, the the processing unit 202 is configured to extract information associated with the hardware and software configuration for the engineering object from the at least one metadata tag and the set of metadata tags.

The automation module 112 further causes the processing unit 202 to generate a response to the user request by application of a natural language processing algorithm on the extracted hardware and software configuration. In one example, the generated response is at least one of a sound based or video based response. The natural language algorithm is configured to convert the extracted hardware and software configuration into a user perceivable response. In another example, the response to the user response is generated by application of the natural language processing algorithm on the at least one metadata tag and the determined set of metadata tags. The method further comprises outputting the generated response to a user via an output device such as a speaker, display monitor, or a handheld device.

The automation module 112 further causes the processing unit 202 to integrate the plurality of metadata tags into a plurality of virtual engineering objects associated with the plurality of engineering objects of the engineering project. Examples of the plurality of virtual engineering objects include but is not limited to a digital twin of the plurality of engineering object, code snippets, firmware sourcecode, object libraries, and programming code of the plurality of engineering objects.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102.

In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG. 3 is explained in conjunction with FIG. 1 and FIG. 2.

The request handler module 302 is configured for receiving the request to generate the plurality of metadata tags 124A-N associated with the engineering project 106. For example, the request is received from one of the one or more users external to the industrial environment 100 via the network 104. In alternative embodiment, the request is received from the one or the one or more client devices 120A-N via the network 104.

The object behavior model generation module 304 is configured for generating the name graph of the automation markup language file. In a preferred embodiment, the generated name graph comprises information about relationships between a set of variables corresponding to each document of the plurality of documents and the plurality of engineering objects 108A-N of the engineering project 106. In one example, the name graph is a knowledge graph based representation comprising a plurality of layers.

The analysis module 306 is configured for analyzing the name graph associated with the automation language markup file associated with the plurality of documents. Specifically, the analysis module 306 is configured for applying the deep learning model on the name graph.

The natural language processing module 308 is configured for converting the plurality of documents into the automation language markup file.

The engineering object database 310 is configured for generating an engineering object library comprising the generated object behavior models, information about the plurality of engineering objects 108A-N, information about physical connections between the plurality of engineering objects 108A-N, and a plurality of parameter values associated with the plurality of engineering objects 108A-N and the physical connections. The engineering object database 310 is configured for continuously updating the engineering object library with updated versions of the engineering programs. Also, the engineering object database 310 is configured for maintaining the engineering object library in an name graph.

The validation module 312 is configured to generate a simulation instance for the plurality of engineering objects 108A-N of the technical installation. In one example, the simulation instance is a digital twin of the plurality of engineering objects 108A-N. The validation module 312 is configured to simulate execution of one or more engineering programs by the plurality of engineering objects 108A-N of the technical installation in a simulation environment by executing the one or more engineering programs on the generated simulation instance.

The deployment module 314 is configured for integrating the plurality of metadata tags 124A-N in real-time onto the plurality of engineering objects 108A-N installed in the technical installation during runtime.

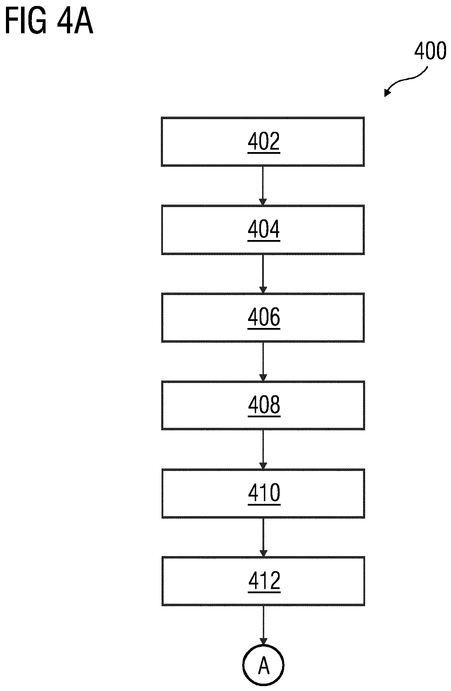

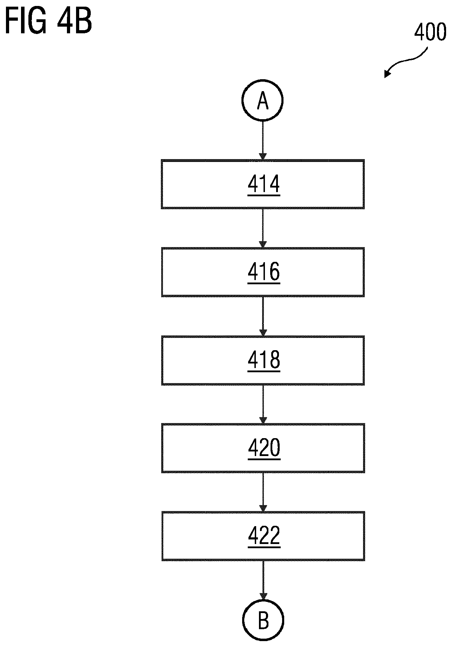

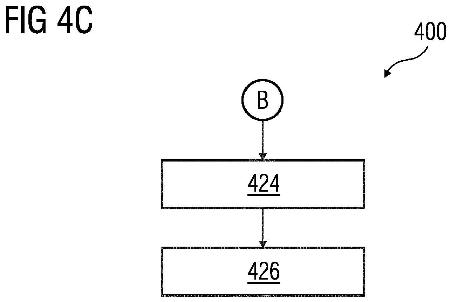

FIG 4A-D is a process flowchart illustrating an exemplary method 400 of generating a plurality of metadata tags 124A-N in an engineering system 102, according to an embodiment of the present invention. FIG 4A-D is described in conjunction with FIG 1, 2, and 3.

At 402, the processing unit 202 analyzes, a plurality of documents by application of an optical character recognition algorithm on the plurality of documents. Examples of the optical character recognition algorithm includes but is not limited to a Calamari algorithm, a Kraken algorithm, and a Keras algorithms. The optical character recognition algorithm is configured to generate a plurality of texts from the plurality of documents. In one example, an image capturing device is used to capture a plurality of images of each page in the plurality of documents. In such a case, the optical character recognition algorithm is applied on each of the plurality of images. The processing unit 202 analyzes the plurality of texts with a natural language processing algorithm. In one example, the natural langguage processing algorithm is at least one of a named entity recognition algorithm, a text summarization algorithm, and a tokenization algorithm.

The natural language processing algorithm is configured to extract a plurality of data items from the extracted plurality of texts. The plurality of data items comprises information associated with one or more properties of each engineering object of the plurality of engineering objects. Examples of the one or more properties comprises a name, a voltage rating, a power rating, a purpose, a function, a specification, a manufacturer details, and a maintenance details associated with the plurality of engineering objects. For example, in a case where the plurality of documents comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating".

In another example, the one or more properties comprises hardware and software configuration details of each of the plurality of engineering objects. Examples of information about the hardware configuration includes information about a voltage rating, a power rating, a purpose, a function, a specification, a manufacturer details, and a maintenance details. Examples of information about the software configuration includes information about a software platform, an operating system, supported network protocols and IP address of each engineering object of the plurality of engineering objects. Thus, the method comprises determining by the processing unit, from the analyzed plurality of documents, the plurality of data items which contain information associated with the one or more properties of each of the plurality of engineering objects.

At 404, the processing unit 202 generates a name graph based on an analysis of the determined plurality of data items and the plurality of documents. The name graph is a knowledge graph comprising information about interrelationships between the plurality of data items.

The name graph comprises a plurality of nodes and a plurality of links between each of the plurality of nodes. Each node of the plurality of nodes represents a data item associated with at least one engineering object of the plurality of engineering object. Each link of the plurality of link comprises information associated with an interelationship between one or more engineering objects of the plurality of engineering objects. In other words, each node of the plurality of nodes comprises information associated with a specific property of a specific engineering object of the plurality of engineering objects. Furthermore, the plurality of links between each of the plurality of nodes comprises information about an interrelationship between a first property of an engineering object and a second property of the engineering object.

In one example the plurality of documents comprises a first statement "voltage rating of motor is 300 volts" and a second statement "a first object is a motor" and the plurality of data items comprises the first data item "first object", the second data item "motor", and the third data item "300 volts". In such a case, the plurality of nodes comprises a first node comprising information about the first data item "first object", a second node comprising information about the second data item "motor", a third node comprising information about the third data item "300 volts" and a fourth node comprising information about the fourth data item "voltage rating".

Furthermore, in the name graph, the first node is linked to the second node via a first link. Thus, the name graph comprises a first information that the first data item "the first object" is related to the second data item "motor". Furthermore, in the name graph, the second node is linked to the third node. Thus the name graph comprises a second information that the second data item "the motor" is related to the third data item "300 volts". It is noted that each of the plurality of data items comprises information about a specific engineering object of the plurality of engineering objects.

In other words, the name graph comprises information associated with interrelationships between one or more data items of the plurality of data items, and interrelationships between the plurality of data items and the plurality of engineering objects of the engineering project.

At step 406, the processing unit 202 classifies the plurality of nodes of the name graph into a plurality of groups of nodes, by application of a deep learning model on the plurality of nodes of the name graph. In one example, the deep learning model is at least one of a convolutional neural network, a long short term neural network, recurrent neural network, and a radial basis neural network. In one example, the deep learning model is trained using a training set comprising information about a set of engineering projects and a plurality of name graphs associated with the set of engineering projects. Each of the set of engineering projects comprises a set of engineering objects. Each node of the plurality of name graphs comprises information about a specific engineering object of the set of engineering objects in each of the plurality of engineering projects. In the training set, each node of the plurality of name graph is labelled with a plurality of labels. The plurality of labels comprises information about correspondence between each node of the plurality of name graphs and each engineering objects of the set of engineering objects in each of the plurality of engineering projects.

The deep learning model is trained to classify the plurality of nodes into the plurality of groups such that each group of nodes of the plurality of group of nodes correspond to a specific engineering object of the plurality of engineering objects. In another words, each group of nodes of the plurality of group of nodes comprises information associated with a set of properties of the specific engineering object. Further, the processing unit 202 extracts the set of properties of each engineering object of the plurality of engineering objects, from each group of nodes of the plurality of group of nodes. The processing unit generates one or more metadata tags for each of the plurality of engineering objects by compiling the set of properties extracted for each of the plurality of engineering objects. In otherwords, the one or more metadata tags comprises information about the set of properties associated with each of the plurality of engineering objects. In one example, each property in the set of property is recorded in a specific metadata tag of a plurality of metadata tags. In another example, each metadata tag of the plurality of metadata tags comprises one or more properties associated with the specific engineering object. In other words, the method comprises generating, by the processing unit one or more metadata tags for a specific engineering object of the plurality of engineering objects based on an analysis of each group of nodes of the plurality of group of nodes.

In one example, the one or more metadata tags are generated for the specific engineering object further based on an analysis of one or more data items associated with the plurality of nodes of the name graph. The one or more data items comprises information associated with one or more properties of the plurality of engineering objects. For example, examples of the one or more data items includes but is not limited to a name, a voltage rating, a power rating, a temperature rating of the specific engineering object. In one example, the one or more data items are analysed by the processing unit by application of the deep learning model on the plurality of data items. In one example, the deep learning models is configured to analyze the name graph to determine a plurality of interelationships between the plurality of data items, the plurality of nodes, and the one or more metadata tags generated for each of the plurality of engineering objects. Furthermore, the processing unit is configured to convert the generated plurality of interelationships into a set of name graph instances. The processing unit is configured to convert the plurality of interrelationships to the set of name graphs instances by application of a graph algorithm on the plurality of interrelationships. Examples of the graph algorithm includes but is not limited to a breadth first search algorithm, a depth first search algorithm, and shortest path first search algorithm.

At 408, the processing unit 202 modifies the name graph by inserting the generated set of name graph instances into the name graph. Thus, the modified name graph further comprises information about interrelationships between each of one or more metadata tags and the plurality of group of nodes.

In one example, the generation of the one or more metadata items is executed in a plurality of iterations. Each iterative stage in the plurality of iterations comprises a first step of analyzing, by the processing unit (202), an input set of artifacts (508A-B) in the name graph by application of the Deep learning model on the name graphs. In one example, the input set of artifact comprises one or more nodes of the name graph. In another example, the input set of artifacts comprises one or more data items from the plurality of data items associated with the name graph. In yet another example, the input set of artifacts comprises information associated with an interrelationship between each data item of the plurality of data items, and a specific engineering object of the plurality of engineering objects.

Each iterative stage in the plurality of iterations comprises a second step of determining one or more data items from the plurality of data items based on the analysis of the input set of artifacts. The determined one or more data items comprises information associated with one or more properties of a specific engineering object of the plurality of engineering objects. Each iterative stage in the plurality of iterations comprises a third step of determining, a set of duplicate artifacts in the input set of artifacts. The set of duplicate artifacts are determined based on an comparison of each artifact with other artifacts in the input set of artifacts.

Each iterative stage in the plurality of iterations comprises a fourth step of determining a plurality of differences between each artifact and other artifacts of the input set of artifacts. The processing unit 202 generates a first set of smart artifacts associated with the specific engineering object based on the determined one or more data items. In one example, the first set of smart artifacts is generated further based on the determined plurality of differences. The first set of smart artifacts comprises a set of nodes which comprises a set of properties of a specific engineering object of the plurality of engineering objects. In other words, the first set of smart artifacts comprises information associated with the set of properties of the specific engineering object, and information associated with the interrelationship of the specific engineering object with the determined one or more data items of the plurality of data items.

Each iterative stage in the plurality of iterations comprises a fifth step of generating, by the processing unit 202 a preprocessing dataset from the analyzed input set of artifacts. The preprocessing dataset comprises the preprocessing dataset comprises information about a plurality of properties of all of the plurality of engineering objects other than the specific engineering object. The first set of smart artifacts and the preprocessing dataset are used as the input set of artifacts in a subsequent iteration of the plurality of iterations. Through execution of the plurality of iterations, the processing unit is configured to generate a set of metadata tags for the specific engineering object based on an analysis of the first set of smart artifacts and the preprocessing dataset. In other words, the method comprises generating, by the processing unit, the plurality of metadata tags for the plurality of engineering objects of the engineering project.

At step 410, the processing unit 202 receives a user request for information associated with a first engineering object of the plurality of engineering objects 108A-N of the engineering project. In one example, the user request is received as at least one of a voice based request, a text based request or a gesture based request. In one example, the information requested in the user request comprises information associated with the one or more properties of the first engineering object. In one example, the user request comprises a request for a voltage rating of the first engineering object. In another example, the user request is for information about an optimum hardware configuration for the first engineering object. In yet another example, the user request is for information associated with an optimum software configuration for the first engineering object.

At step 412, the processing unit 202 determines at least one metadata tag from the plurality of metadata tags based on the received user request. The determined at least one metadata tag comprises information associated with the first engineering object. In one example, the received user request comprises a name of the first engineering object. In such a case, the at least one metadata tag is determined based on the name of the first engineering object and a name which is stored in the at least one metadata tag. In another example, the user request comprises a serial number of the first engineering object. In such a case, the at least one metadata tag is determined based on the serial number of the first engineering object and a serial number comprised in the at least one metadata tag.

At step 414, the processing unit 202 analyzes the name graph to determine one or more nodes which correspond to the at least one metadata tag. The one or more nodes comprises one or more properties associated with the first engineering object. For example, the one or more nodes comprise at least one of a voltage, a voltage rating, a temperature, a temperature rating, a power rating, an optimum hardware configuration or an optimum software configuration of the engineering object. Furthermore, the one or more nodes are linked to each other via one or more links in the name graph. The one or more links comprise information associated with dependencies between the one or more properties of the first engineering object. For example, a first property of the first engineering object may depend on a second property of the engineering object. In one example, a voltage rating of the first engineering object may depend upon a temperature of the engineering object. Hence, in such a case, a first node representing the temperature of the first engineering object is linked to a second node which represents the voltage rating of the first engineering object.

At step 416, the processing unit 202 determines a set of nodes in the name graph, which are related to the determined one or more nodes of the name graph. The determined set of nodes those nodes which are connected to the determined one or more nodes via one or more links of the plurality of links of the name graph. In one example, the set of nodes comprises information associated one or more properties of a second engineering object. The second engineering object is contextually related to the first engineering object. In one example, the first engineering object is communicatively coupled to the second engineering object in the engineering project. In such a case, one or more properties of the first engineering object is dependent on the second engineering object. For example, in a case where the second engineering object uses a specific communication protocol to communicate, then the first engineering object also has to use the specific communication protocol to communicate with the second engineering object. Hence, a property, of the first engineering object, is to use the specific communication protocol. In another example, the first engineering object and the second engineering object are connected in an electrical series connection. Furthermore, the first engineering object has a first current rating which is higher than a second current rating of the second engineering object. In such a case, a current rating of the first engineering object is considered to be the second current rating instead of the first current rating. In another example, one or more properties of the first engineering object is dependent upon a configuration details of the second engineering object. In such a case, the set of nodes comprise information about the configuration details of the second engineering objects.

At step 418, the processing unit 202 analyzes the name graph to determine a set of metadata tags from the plurality of metadata tags. The set of metadata tags are associated with the set of nodes of the name graph. In other words, the set of metadata tags are contextually related to the at least one metadata tag associated with the first engineering object. The set of metadata tags comprise information about one or more properties of the first engineering object, which are contextually related with one or more properties of the second engineering object. The set of metadata tags are determined based on an analysis of the set of nodes and the determined one or more nodes of the name graph. The set of metadata tags and the at least one metadata tag comprises information about one or more properties of the first engineering object and the second engineering object. In one example, the one or more properties, in the set of metadata tags and the at least one metadata tag, comprises a hardware configuration information and a software configuration information for the first engineering object. Examples of the hardware configuration information includes but is not limited to information about a voltage rating, a current rating, a input port connection, an output port connection, a connection diagram of the first engineering object, and information associated with interconnections between the first engineering object and other engineering objects in the plurality of engineering objects of the engineering project. Examples of the software configuration information comprises, but is not limited to an operating system, a computation platform, and a communication protocol of the first engineering object.

At 420, the processing unit extracts the one or more properties of the first engineering object and the second engineering object from the set of metadata tags and the at least one metadata tag. In one example, the the processing unit is configured to extract information associated with the hardware and software configuration for the engineering object from the at least one metadata tag and the set of metadata tags.

At step 422, the processing unit 202 generates a response to the user request by application of a natural language processing algorithm on the extracted hardware and software configuration. In one example, the generated response is at least one of a sound based or video based response. The natural language algorithm is configured to convert the extracted hardware and software configuration into a user perceivable response. In another example, the response to the user response is generated by application of the natural language processing algorithm on the at least one metadata tag and the determined set of metadata tags. At step 424, the processing unit outputs the generated response to a user via an output device such as a speaker, display monitor, or a handheld device.

At step 426, the processing unit 202 integrates the plurality of metadata tags into a plurality of virtual engineering objects associated with the plurality of engineering objects of the engineering project. Examples of the plurality of virtual engineering objects include but is not limited to a digital twin of the plurality of engineering object, code snippets, firmware sourcecode, object libraries, and programming code of the plurality of engineering objects.

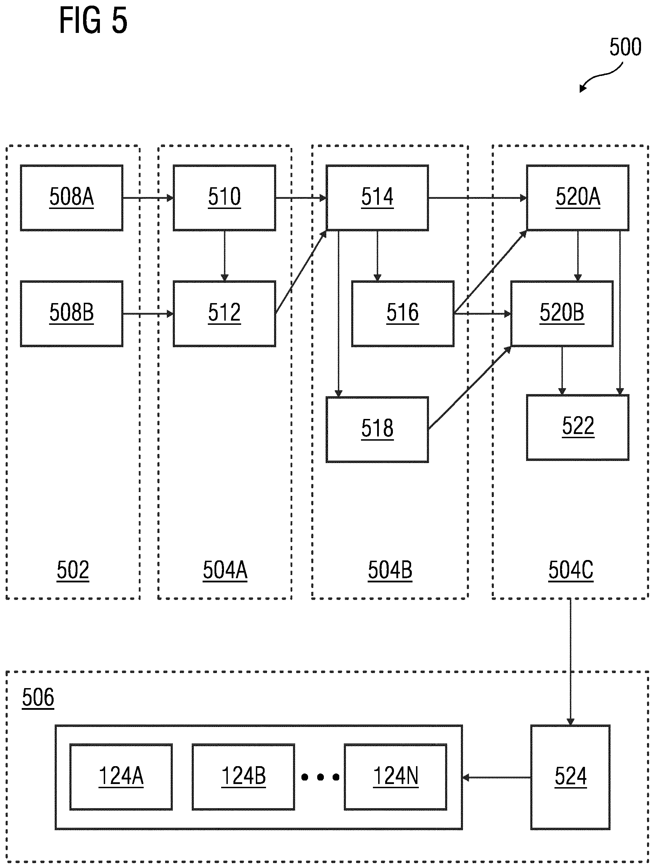

FIG 5 is a schematic representation of an exemplary process of generating the plurality of metadata tags 124A-N for a plurality of engineering objects 108A-N, according to an embodiment of the present invention.

As discussed, the plurality of metadata tags 124A-N are generated from the plurality of data items in which the plurality of engineering objects 108A-N are mentioned in the plurality of documents.

The processing unit 202 is configured to generate the plurality of metadata tags 124A-N by executing one or more steps in each of an input stage 502, a plurality of iterative stages 504A-C and a final stage 506. The iterative stage 504A-C comprises at least a first iteration 504A, a second iteration 504B, and a third iteration 504C. It is noted that the plurality of iterative stages 504A-C may have more than three iterations.

In the input stage 502, the plurality of documents are converted into an input set of artifacts 508A-B. To generate the input set of artifacts 508A-B, a plurality of data items in the plurality of documents are processed by the processing unit 202. The processing unit 202 generates a plurality of combinations of the plurality of data items. In one example, the input set of artifacts 508A-B comprises plurality of combinations of the plurality of data items.

For example, the plurality of documents may contain a first document comprising two data items: a location of a motor and a location of a furnace. Further, the plurality of documents may contain a second document comprising two data items: a name of a motor and a name of a furnace. In such a case, the processing unit 202 is configured to generate the plurality of combinations comprising a first combination of the location of the motor and the name of the motor, a second combination of the location of the motor and the name of the furnace, a third combination of the location of the furnace and the name of the motor, and a fourth combination of the location of the furnace and the name of the furnace. Thus, the input set of artifacts 508A-B comprises information about the first combination, the second combination, the third combination, and the fourth combination. In the first iteration 504A, the processing unit 202 is configured to analyzing, by the processing unit 202, the input set of artifacts 508A-B by application of the Deep learning model. The deep learning model is trained to determine the one or more relevant data items in the input set of artifacts 508A-B.

For example, the deep learning model is trained to determine the first combination as relevant data item as the first combination comprises name and location of a single engineering object, that is, the motor. Similarly, the deep learning model is trained to determine the fourth combination as a relevant data item as the fourth combination comprises name and location of a single engineering object, that is, the furnace.

The deep learning model is trained to determine the second combination as irrelevant data items as the second combination comprises the location of the motor and the name of the furnace. Thus, the second combination is erroneous.

In the first iteration 504A, the one or more relevant data items are determined by the processing unit 202, from the input set of artifacts 508A-B, based on the analysis of the input set of artifacts 508A-B. Then, data items which are not relevant data items are eradicated by the processing unit 202 from the input set of artifacts 508A-B to generate a first preprocessing dataset 510. The preprocessing dataset comprises one or more relevant data items from the input set of artifacts 508A-B. Further, a first smart artifact 512 is generated from the first preprocessing dataset 510. The processing unit 202 is further configured to generate a plurality of combination from data items in the first preprocessing dataset 510 and the first smart artifact 512. Thus, the first preprocessing dataset 510 and the first smart artifact 512 are input to the second iteration 504B. Similarly, the processing unit 202 is configured to generate a second preprocessing dataset 514 in the second iteration 504B. Similarly, the processing unit 202 is configured to generate a second smart artifact 516 and a third smart artifact 518 in the second iteration 504B. Similarly, the processing unit 202 is configured to generate a third preprocessing dataset 520A and a fourth preprocessing dataset 520B in the third iteration 504C. The processing unit 202 is configured to generate a fourth smart artifact 522 in the third iteration 504C.

The processing unit 202 is further configured to generate a final dataset 524 from a plurality of data sets and a plurality of smart artifacts generated in the iterative stages 504A-C. The final dataset 524 comprises information associated with the one or more properties of the plurality of engineering objects 108A-N. The processing unit 202 is further configured to generate the plurality of metadata tags 124A-N from the final dataset 524.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

1. an industrial environment 100
2. an engineering system 102
3. one or more client devices 120A-N
4. a network 104
5. one or more engineering objects 108A-N
6. one or more client devices 120A-N
7. a platform 110
8. a automation module 112
9. the plurality of metadata tags 124A-N
10. a server 114
11. a network interface 116
12. a database 118
13. a controller device 124
14. digital twin 126
15. a processor(s) 202
16. an accessible memory 204
17. a storage unit 206
18. a communication interface 208
19. an input-output unit 210
20. a network interface 212
21. a bus 214
22. an integrated development environment (IDE) 216
23. a request handler module 302,
24. a digital twin generation module 304,
25. an analysis module 306,
26. a modifier module 308
27. an engineering object database 310
28. a validation module 312
29. a deployment module 314.

## Claims

1. A method of implementing a virtual assistant for automatic configuration of engineering objects, the method comprising:
generating, by the processing unit (202), a plurality of data items for each of a plurality of engineering objects (108A-N) of an engineering project (106), wherein the plurality of data items are generated by application of an optical character recognition algorithm on a plurality of documents associated with the engineering project (106);
generating, by the processing unit (202), a name graph based on an analysis of the generated plurality of data items and the plurality of documents;
generating, by the processing unit (202), a plurality of metadata tags (124A-N) for the plurality of engineering objects based on the plurality of data items generated from the plurality of documents;
receiving, by the processing unit (202), a user request for information associated with an engineering object (108A) of the plurality of engineering objects (108A-N) of the engineering project (106);determining, by the processing unit (202), at least one metadata tag (124A) from the plurality of metadata tags (124A-N) based on the received user request, wherein the determined at least one metadata tag (124A) comprises information associated with the engineering object (108A);
determining from the plurality of metadata tags (124A-N), by the processing unit (202), a set of metadata tags which are contextually related to the determined at least one metadata tag (124A) based on an analysis of the name graph;
generating, by the processing unit (202), a response to the user request by application of a natural language processing algorithm on the at least one metadata tag (108A) and the contextually related set of metadata tags; and
outputting, by the processing unit (202), the generated response to the user via an output device (120AN).

2. The method according to claim 1, wherein:
the plurality of documents comprises information associated with one or more properties of the plurality of engineering objects (108A-N), and
each of the plurality of metadata tags (124A-N) comprises information about a specific property of the one or more properties of the plurality of engineering objects (108A-N).

3. The method according to claim 2, wherein
the one or more properties of the plurality of engineering objects (108A-N) comprises hardware and software configuration details of each of the plurality of engineering objects (108A-N),
the information requested in the user request comprises information associated with a hardware and software configuration for the engineering object (108A); and
the generated response comprises information associated with the hardware and software configuration for the engineering object (108A).

4. The method according to claims 1 and 2, further comprising configuring, by the processing unit (202), the engineering object (108A) based on the hardware and software configuration indicated in the generated response.

5. The method according to claims 1, 2 or 3, wherein generation of the name graph comprises:
analyzing, by the processing unit (202), the plurality of documents by application of the optical character recognition algorithm on the plurality of documents;
determining, by the processing unit (202), from the analyzed plurality of documents, the plurality of data items which contain information associated with one or more properties of each of the plurality of engineering objects (108A-N); and
generating, by the processing unit (202), the name graph based on an analysis of the determined plurality of data items, wherein
the name graph comprises information associated with interrelationships between one or more data items of the plurality of data items, and interrelationships between the plurality of data items and the plurality of engineering objects (108A-N) of the engineering project (106), and
the name graph comprises a plurality of nodes.

6. The method according to any of the claims 1 to 5, wherein generation of the one or more metadata tags for each of the plurality of engineering objects (108A-N) comprises:
classifying, by the processing unit (202), the plurality of nodes of the name graph into a plurality of groups of nodes, by application of a deep learning model on the plurality of nodes of the name graph, wherein each group of nodes of the plurality of group of nodes correspond to a specific engineering object of the plurality of engineering objects (108A-N);
generating, by the processing unit (202), the one or more metadata tags for the specific engineering object based on an analysis of each group of nodes of the plurality of group of nodes and one or more data items associated with the plurality of nodes of the name graph; and
modifying, by the processing unit (202), the name graph such that the modified name graph further comprises information about interrelationships between each of the plurality of metadata tags (124A-N) and the plurality of group of nodes.

7. The method according to any of the claims 1 to 6, wherein the generation of the plurality of metadata tags (124A-N) for the plurality of engineering objects (108A-N) is executed in a plurality of iterations (504A-C), wherein each iterative stage comprises:
analyzing, by the processing unit (202), an input set of artifacts (508A-B) in the name graph by application of a Deep learning model on the name graph, wherein the input set of artifacts (508A-B) comprises information about an interrelationship between each data item of the plurality of data items, and a specific engineering object of the plurality of engineering objects (108A-N);
determining, by the processing unit (202), one or more data items from the plurality of data items based on the analysis of the input set of artifacts, wherein the determined one or more data items comprises information related to the specific engineering object;
generating, by the processing unit (202), a first set of smart artifacts associated with the specific engineering object based on the determined one or more data items, wherein the first set of smart artifacts comprises information associated with a set of properties of the specific engineering object;
generating, by the processing unit (202), a preprocessing dataset (510) from the analyzed first set of artifacts (508A-B), wherein
the preprocessing dataset (510) comprises information about a plurality of properties of the plurality of engineering objects (108A-N) and the specific engineering object,
the first set of smart artifacts and the preprocessing dataset (510) are used as the input set of artifacts (508A-B) in a subsequent iteration of the plurality of iterations (504A-C); and
generating, by the processing unit (202), a set of metadata tags for the specific engineering object based on an analysis of the first set of smart artifacts, wherein each of the set of metadata tags comprises information associated with interrelationship between the one or more data items and the specific engineering objects.

8. The method according to any of the claims 1 to 7, wherein determining the set of metadata tags which are contextually related to the at least one metadata tag (124A) comprises:
analyzing, by the processing unit (202), the name graph to determine one or more nodes which correspond to the at least one metadata tag (124A);
determining, by the processing unit (202), a set of nodes in the name graph which are related to the determined one or more nodes based on the analysis of the name graph; and
determining, by the processing unit (202), the set of metadata tags which are contextually related to the at least one metadata tag (124A) based on the analysis of the set of nodes and the determined one or more nodes.

9. The method according to any of the claims 1 to 8, wherein generating the response to the user request comprises:
extracting, by the processing unit (202), information associated with the hardware and software configuration for the engineering object (108A) from the at least one metadata tag (124A) and the set of metadata tags; and
generating, by the processing unit (202), the response to the user request by application of a natural language processing algorithm on the extracted hardware and software configuration.

10. The method according to claims 1 and 2, further comprising displaying, by processing unit (202), the generated response to a user.

11. The method according to claim 1, further comprising:
integrating, by the processing unit (202), the plurality of metadata tags (124A-N) into a plurality of virtual engineering objects associated with the plurality of engineering objects (108A-N) of the engineering project (106).

12. An engineering system for implementing a virtual assistant for automatic configuration of engineering objects, wherein the engineering system comprises:
one or more processor(s) (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-11.

13. An industrial environment (100) comprising:
an engineering system (102) as claimed in claim 10;
a technical installation comprising one or more physical components; and
one or more client devices (120A-N) communicatively coupled to the engineering system (102) via a network (104), wherein the engineering system (102) is configured to perform a method according to any of the claims 1 to 11.

14. A computer-program product, having machine-readable instructions stored therein, that when executed by a processing unit (202), cause the processors to perform a method according to any of the claims 1-11.
